# EUROPEAN PATENT SPECIFICATION

(11) **EP 0 992 098 B1**
(45) Date of publication and mention of the grant of the patent: **02.10.2002**
(21) Application number: 98931142.8
(22) Date of filing: 25.06.1998
(51) Int. Cl.: H02H 7/085, E05F 15/00

(54) **ANTISQUEEZE PROTECTION**
EINKLEMMSCHUTZ
SYSTEME DE PROTECTION EMPECHANT LE COINCEMENT DANS UNE OUVERTURE

(30) Priority: 25.06.1997 NL 1006400
(43) Date of publication of application: 12.04.2000
(73) Proprietor: N.V. Nederlandsche Apparatenfabriek NEDAP, NL-7141 DE Groenlo (NL)
(72) Inventor: ELSINGHORST, Rudgerus, Bernardus, Albertus, NL-7101 GW Winterswijk (NL); STEENTJES, Hendrikus, Bernardus, Maria, NL-7011 VJ Gaanderen (NL)
(74) Representative: Ottevangers, Sietse Ulbe
(86) International application number: NL9800370
(87) International publication number: WO98059401

(56) References cited:
- DE-A- 4 445 106
- GB-A- 2 271 863

## Description

The invention relates to a device for controlling a movable member for closing or clearing an opening at will, suitable in particular for controlling the panel of a sliding roof or a window in a door of a vehicle, a direct-current motor being arranged for driving the movable member, and detection means being arranged for detecting a body being caught between the movable member and an edge of the opening, wherein the detection means are arranged to measure the motor current flowing through the direct-current motor and, upon detection of a predetermined increase of the motor current or a related quantity, to provide a body-caught, detection signal.

A known method is measuring the motor current increase caused by a body being caught. A somewhat more advanced method is measuring a gradient of the motor current increase, i.e., the change per unit of time dI/dt. Such methods are described, e.g., in DE 44 45 106.

Furthermore, a current sensor is provided to determine the rotational speed of the motor. Only if the rotational speed does not exceed a predetermined value a release signal is generated which releases the body-caught detection signal.

When the direct-current motor starts, this will entail a current peak, which will decrease when the motor starts running. Play in the drive, which becomes noticeable especially if the direction of rotation of the motor is reversed, causes a decrease in the motor current, and a change in the measured rotational speed, whereupon the motor current rises again as the roof panel or the like begins to move, and then remains reasonably constant.

If there is no play, however, this decrease and the subsequent increase of the motor current will not occur whereas the change in the rotational speed will not occur. Therefore, since it is not always clear whether an increase in the motor current is caused by play or by a body being caught, the known methods are not always reliable. This is true in particular if a body is caught very shortly after the beginning of the actuation of the closing movement of the sliding rood or the window or the like.

The object of the invention is to obviate the drawback outlined, and more generally to provide an improved caught-body security facility.

To that end, according to the invention, a device of the type described is characterized in that further a position sensor is provided, which can measure the displacement of the movable member; and
that means are arranged which provide that a body-caught detection signal is transmitted only after the position sensor has indicated that the movable member has begun to move.

The invention will be further described with reference to the accompanying drawings.
Fig. 1 diagrammatically shows the current of a driving motor for a sliding panel without play, as well as motion information regarding the sliding panel (pulses);
Fig. 2 diagrammatically shows the current of a driving motor of a sliding panel with play, as well as motion information regarding the sliding panel (pulses);
Fig. 3 schematically shows a combination of driving motor, driving cables, crenellation wheel with sensors and movable sliding panel; and
Fig. 4 schematically shows a sliding roof whose sliding panel is in the ventilation position.

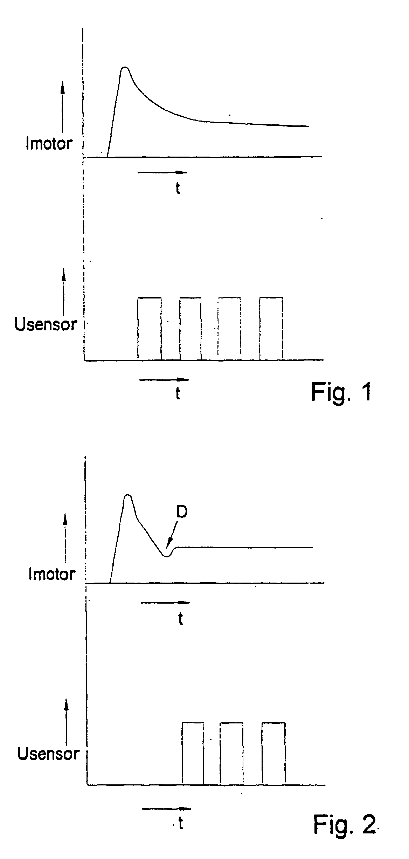

Fig. 1 shows the motor current Imotor of a direct-current motor driving a movable panel. Fig. 1 also represents the pulses (Usensor) caused by the displacement of the panel, which can be, for instance, a sliding roof panel, a car window, etc., and measured by a position sensor.

Fig. 2 schematically shows an example of the current Imotor drawn by a direct-current motor in the case where the direct-current motor drives a sliding panel via a transmission with some play. The play causes a brief dip D in the motor current, which ends after the play has been absorbed. Similarly to Fig. 1, Fig. 2 further shows a number of pulses obtained in a manner to be described hereinafter, using a sensor operatively detecting the movement of the sliding panel. In this example, the pulses are voltage pulses Usensor, which are a measure for the distance traveled by the sliding panel. A comparison of Figs. 1 and 2 clearly shows that in the case of play (Fig. 2), the sliding panel begins to move at a later time.

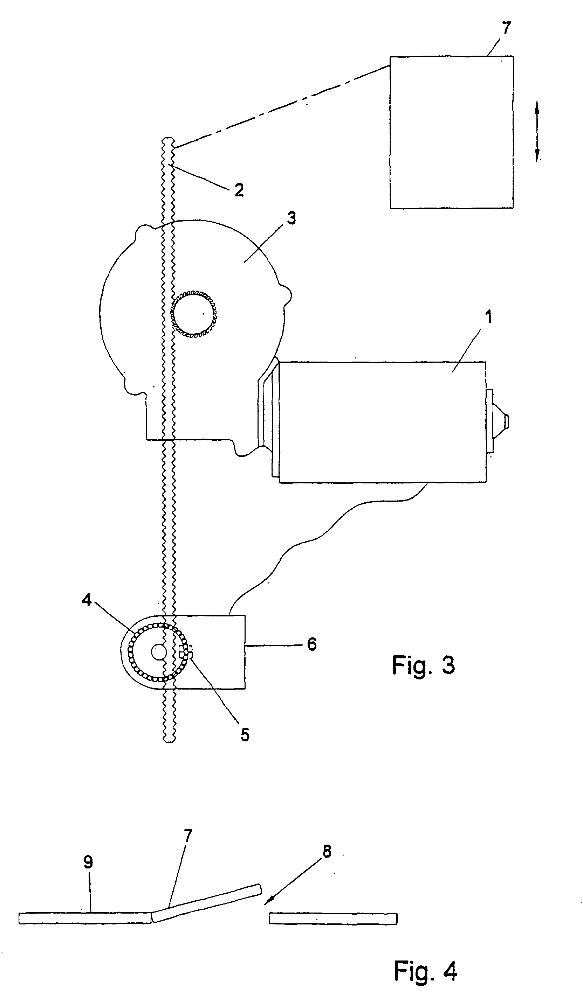

Fig. 3 diagrammatically shows the combination of a motor 1, a transmission element 2, coupled to the motor via a reduction gear unit 3, a crenellate wheel 4, a control unit 6 and a position sensor 5. The transmission element can comprise, for instance, a gear rack, or a driving cable or the like, and drives the sliding panel 7. These voltage pulses Usensor can be obtained, for instance, as follows. The driving element 2 connected to the movable panel and driven by the motor via the reduction 3 causes the panel to move. The driving element 2 also drives a crenellate wheel 4. The crenellations of this wheel move through a position sensor 5 designed as a slotted sensor with an optical transmitter and receiver (not shown) of a control unit 6. If a crenellation interrupts the optical path between transmitter and receiver, this yields a logic signal ("1"). If a crenellation leaves the optical path between transmitter and receiver, this yields a different logic signal ("0"). By providing that the crenellation wheel 4 is driven by the driving element 2, the play between motor 1, reduction 3 and driving element 2 no longer has any influence on the movement of the crenellation wheel 4.

By monitoring the motor current for, for instance, a predetermined current gradient (dI/dt) from the moment when the flank of the first sensor pulse is detected, any body being caught can be detected immediately after the beginning of the movement of the sliding panel. Alternatively, instead of a current gradient (dI/dt), a change of another quantity, derived from the motor current, for instance a predetermined increase of the motor current, can be taken as signaling a body being caught. If desired, the value of the predetermined current gradient (dI/dt) or of the increase of the current can be made dependent on the instantaneous position of the sliding panel. For instance, the motor current or the gradient thereof or another quantity related to the motor current may be measured not until the panel has moved over a predetermined distance.

Fig. 4 schematically shows a sliding roof panel in the ventilation position. In a sliding roof having a ventilation position, the roof panel 7, when opened, will generally be in an oblique position with respect to the surrounding roof 9. As a consequence, the weight of the roof panel will by nature cause any play in the transmission to be absorbed. The ventilation opening 8 in a sliding roof is typically not large, and typically only little displacement of the driving cable is needed to close the ventilation opening. For that reason, it is of importance, especially in the ventilation position, to start monitoring the motor current immediately after the start of the movement of the roof panel, since a body might be caught already after a very slight movement from the ventilation position and hence this should be immediately detectable.

After a body-caught situation has been detected, the control unit 6 can feed a signal to the motor 1, causing the motor to stop and/or the direction of rotation of the motor to be reversed.

It is noted that after the foregoing, various modifications will readily occur to those skilled in the art. Thus, a different type of position sensor or a differently driven position sensor may be used. The position sensor may be coupled to the transmission mechanism, but may alternatively be coupled to the sliding panel or, possibly, to the reduction gear unit. The position sensor may further comprise a magnetic element and one or more Hall sensors. Also, a potentiometer may be used as position sensor. The position sensor can also be designed as an inductive or capacitive pulse generator. The sliding panel can be any type of panel driven by an electric motor.

## Claims

1. A device for controlling a movable member for closing or clearing an opening at will, suitable in particular for controlling the panel of a sliding roof or a window in a door of a vehicle, a direct-current motor being arranged for driving the movable member, and detection means being arranged for detecting a body being caught between the movable member and an edge of the opening, wherein the detection means are arranged to measure the motor current flowing through the direct-current motor and, upon detection of a predetermined increase of the motor current or a related quantity, to provide a body-caught detection signal, **characterized in that** further a position sensor is provided, which can measure the displacement of the movable member; and
that means are arranged which provide that a body-caught detection signal is transmitted only after the position sensor has indicated that the movable member has begun to move.

2. A device according to claim 1, **characterized in that** the quantity related to the motor current is the increase per unit of time.

3. A device according to claim 1 or 2, **characterized in that** a body-caught detection signal can be transmitted if the position sensor indicates that the movable member has moved over a predetermined distance.

4. A device according to any one of claims 1-3, **characterized in that** the position sensor is operated by the driving element.

5. A device according to claim 4, **characterized in that** the driving element is a driving cable.

6. A device according to claims 1-4, **characterized in that** the position sensor is operated by the motor reduction.

7. A device according to claims 1-4, **characterized in that** the position sensor is operated by the roof panel.

8. A device according to any one of the preceding claims, **characterized in that** the sensor comprises a wheel with crenellations and one or more optical transmitters and receivers.

9. A device according to claims 1-8, **characterized in that** the sensor comprises a wheel with magnets and one or more Hall sensors.

10. A device according to claims 1-8, **characterized in that** the sensor comprises a potentiometer.

11. A device according to claims 1-8, **characterized in that** the sensor comprises an inductive pulse generator.

12. A device according to claims 1-8, **characterized in that** the sensor comprises a capacitive pulse generator.

## Patentansprüche

1. Vorrichtung zum Steuern eines bewegbaren Elements zum willentlichen Schließen oder Freigeben einer Öffnung, insbesondere zum Steuern der Scheibe eines Schiebedachs oder eines Fensters in der Tür eines Fahrzeugs, wobei ein Gleichstrommotor zum Antreiben des bewegbaren Elements vorgesehen ist, und eine Erkennungseinrichtung zum Erkennen eines zwischen dem bewegbaren Element und einem Rand der Öffnung eingeklemmten Körpers vorgesehen ist, wobei die Erkennungseinrichtung den durch den Gleichstrommotor fließenden Motorstrom mißt und, beim Erkennen eines vorbestimmten Anstiegs des Motorstroms oder einer damit zusammenhängenden Größe, ein die Erkennung eines eingeklemmten Körpers angebendes Signal erzeugt,
**dadurch gekennzeichnet, daß**
ferner ein Positionssensor vorgesehen ist, der die Verschiebung des bewegbaren Elements mißt, und
eine Einrichtung vorgesehen ist, die bewirkt, daß das die Erkennung eines eingeklemmten Körpers angebende Signal erst übertragen wird, wenn der Positionssensor angezeigt hat, daß eine Bewegung des bewegbaren Elements begonnen hat.

2. Vorrichtung nach Anspruch 1, **dadurch gekennzeichnet, daß** die mit dem Motorstrom zusammenhängende Größe derAnstieg pro Zeiteinheit ist.

3. Vorrichtung nach Anspruch 1 oder 2, **dadurch gekennzeichnet, daß** das die Erkennung eines eingeklemmten Körpers angebende Signal übertragen werden kann, wenn der Positionssensor angibt, daß das bewegbare Element sich über eine vorbestimmte Entfernung bewegt hat.

4. Vorrichtung nach einem der Ansprüche 1-3, **dadurch gekennzeichnet, daß** der Positionssensor durch das Antriebselement betätigt ist.

5. Vorrichtung nach Anspruch 4, **dadurch gekennzeichnet, daß** das Antriebselement ein Antriebskabel ist.

6. Vorrichtung nach einem der Ansprüche 1-4, **dadurch gekennzeichnet, daß** der Positionssensor durch die Motoruntersetzung betätigt wird.

7. Vorrichtung nach einem der Ansprüche 1-4, **dadurch gekennzeichnet, daß** der Positionssensor durch das Schiebedach betätigt wird.

8. Vorrichtung nach einem der vorhergehenden Ansprüche, **dadurch gekennzeichnet, daß** der Sensor ein gezahntes Rad und einen oder mehrere optische Sender und Empfänger aufweist.

9. Vorrichtung nach einem der Ansprüche 1-8, **dadurch gekennzeichnet, daß** der Sensor ein Rad mit Magneten und einen oder mehrere Hall-Sensoren aufweist.

10. Vorrichtung nach einem der Ansprüche 1-8, **dadurch gekennzeichnet, daß** der Sensor ein Potentiometer aufweist.

11. Vorrichtung nach einem der Ansprüche 1-8, **dadurch gekennzeichnet, daß** der Sensor einen induktiven Impulsgenerator aufweist.

12. Vorrichtung nach einem der Ansprüche 1-8, **dadurch gekennzeichnet, daß** der Sensor einen kapazitiven Impulsgenerator aufweist.

## Revendications

1. Dispositif pour commander un élément mobile pour fermer ou ouvrir une ouverture à volonté, adapté en particulier pour commander le panneau d'un toit ouvrant ou une fenêtre dans une porte de véhicule, un moteur à courant continu étant agencé pour entraîner l'élément mobile, et des moyens de détection étant agencés pour détecter un corps pris entre l'élément mobile et un bord de l'ouverture, les moyens de détection étant agencés de façon à mesurer le courant de moteur qui traverse le moteur à courant continu et, lors de la détection d'une augmentation préalablement déterminée du courant de moteur ou d'une quantité associée, à fournir un signal de détection de corps pris, **caractérisé en ce qu'**est prévu en outre un capteur de position, qui peut mesurer le déplacement de l'élément mobile ; et
**en ce que** des moyens sont agencés qui permettent de faire en sorte qu'un signal de détection de corps pris n'est transmis qu'après que le capteur de position a indiqué que l'élément mobile a commencé à se déplacer.

2. Dispositif selon la revendication 1, **caractérisé en ce que** la quantité associée au courant de moteur est l'augmentation par unité de temps.

3. Dispositif selon la revendication 1 ou 2, **caractérisé en ce qu'**un signal de détection de corps pris peut être transmis si le capteur de position indique que l'élément mobile s'est déplacé sur une distance préalablement déterminée.

4. Dispositif selon l'une quelconque des revendications 1 à 3, **caractérisé en ce que** le capteur de position est actionné par l'élément d'entraînement.

5. Dispositif selon la revendication 4, **caractérisé en ce que** l'élément d'entraînement est un câble d'entraînement.

6. Dispositif selon les revendications 1 à 4, **caractérisé en ce que** le capteur de position est actionné par la réduction du moteur.

7. Dispositif selon les revendications 1 à 4, **caractérisé en ce que** le capteur de position est actionné par le panneau de toit.

8. Dispositif selon l'une quelconque des revendications précédentes, **caractérisé en ce que** le capteur comprend une roue à crénelures et un ou plusieurs émetteurs et récepteurs optiques.

9. Dispositif selon les revendications 1 à 8, **caractérisé en ce que** le capteur comprend une roue à aimants et un ou plusieurs capteurs à effet Hall.

10. Dispositif selon les revendications 1 à 8, **caractérisé en ce que** le capteur comprend un potentiomètre.

11. Dispositif selon les revendications 1 à 8, **caractérisé en ce que** le capteur comprend un générateur d'impulsions par induction.

12. Dispositif selon les revendications 1 à 8, **caractérisé en ce que** le capteur comprend un générateur d'impulsions par capacité.
